# FASCICULE DE BREVET EUROPEEN

(11) **EP 1 406 430 B1**
(45) Date de publication et mention de la délivrance du brevet: **07.12.2005**
(21) Numéro de dépôt: 03102744.4
(22) Date de dépôt: 19.09.2003
(51) Int. Cl.: H04M 3/53

(54) **Procédé de messagerie vocale instantanée et dispositif de mise en oeuvre d'un tel procédé**
Verfahren und System zur durchführung von augenblicklichem Nachrichtenverkehr
Instant messaging method and system

(30) Priorité: 01.10.2002 FR 0212152
(43) Date de publication de la demande: 07.04.2004
(73) Titulaire: Société Française du Radiotéléphone-SFR, 75008 Paris (FR)
(72) Inventeur: Marsot, Rodolphe, 38000 Grenoble (FR)
(74) Mandataire: Schmit, Christian Norbert Marie

(56) Documents cités:
- WO-A-00/59196

## Description

L'invention a pour objet un procédé de messagerie vocale instantanée et dispositif de mise en oeuvre d'un tel procédé.

Le domaine de l'invention est celui de la téléphonie et des messageries vocales. Plus particulièrement le domaine de l'invention est celui des répondeurs vocaux permettant de prendre les messages d'utilisateurs appelants lorsque les utilisateurs appelés, abonnés à un service de messagerie, ne sont pas joignables.

Un but de l'invention est d'enrichir les messages vocaux lors de leur écoute, après enregistrement, par l'utilisateur auquel le message vocal est destiné. Un autre but de l'invention est d'éviter d'avoir à stocker sur un serveur des messages vocaux. Un autre but de l'invention est de permettre à un opérateur de téléphonie de proposer, et/ou de contrôler, un service de messagerie vocale.

Dans l'état de la technique on connaît des services de messagerie vocale tels que ceux proposés par les opérateurs de téléphonie mobile. Lorsqu'un abonné à l'opérateur de téléphonie mobile n'est pas joignable, un utilisateur appelant cherchant à joindre l'utilisateur injoignable est automatiquement connecté à une boîte vocale. Cette boîte vocale diffuse alors un message d'accueil après lequel l'utilisateur appelant peut enregistrer un message. La connexion à cette boîte vocale se fait forcément par un appareil de téléphonie, qu'il soit fixe ou mobile.

D'autre part le message vocal enregistré par l'utilisateur appelant est enregistré sur l'appareil, en général appelé le serveur vocal, hébergeant la boîte vocale. Le message vocal est enregistré sur ce serveur jusqu'à ce que l'abonné auquel il est destiné consulte le message et éventuellement l'efface.

Dans l'état de la technique il est de plus impossible de laisser un message vocal à un abonné à un réseau de téléphonie mobile autrement qu'en utilisant un appareil de téléphonie. Les boîtes vocales sont en effet uniquement accessibles via un numéro de téléphone.

Dans l'état de la technique il est aussi très lourd pour l'opérateur de téléphonie mobile de mettre en oeuvre le service de messagerie vocale pourtant indispensable pour couvrir tous les cas où ses abonnés ne souhaitent pas être joints directement, ou tous les cas où ses abonnés ne sont pas dans la zone de couverture de l'opérateur de téléphonie mobile.

Dans l'état de la technique on connaît aussi le document WO 00/59196 A.

Dans l'invention on résout ces problèmes en connectant, au serveur de messagerie vocale, un serveur de transformation des messages vocaux. Dès lors, dès que le serveur de messagerie vocale a enregistré un message vocal, il le transfert au serveur de transformation. Le serveur de messagerie vocale transfert aussi les informations relatives au message vocal comme, par exemple, la date de réception du message vocal, un identifiant de la personne ayant laissé le message vocal. A partir de ces informations, le serveur de transformation produit un message multimédia comportant une mise en forme de ces informations. Cette mise en forme peut revêtir la forme, par exemple, d'un fichier au format HTML, XML, ou autre, comportant des informations de date, d'origine, et le message vocal lui-même. Une fois que le serveur de transformation a produit ce message, celui-ci est alors transféré à un serveur de messagerie de type MMS (Multimedia Messaging Service).

De manière générale, pour permettre une connexion, le serveur MMS envoie une notification au terminal. Le terminal est configuré soit pour télécharger immédiatement et automatiquement le message, soit, en mode différé, sur confirmation par le propriétaire du terminal.

Ainsi un utilisateur, abonné à ce type de messagerie vocale, a alors configuré son terminal pour que celui-ci puisse recevoir des messages de type MMS. Son terminal se connecte alors régulièrement au serveur MMS, ou accepte les requêtes entrantes de la part du serveur MMS. Cela permet au terminal de recevoir le message multimédia comportant le message vocal sous forme d'un fichier compressé. Le fichier compressé est enregistré pour utilisation ultérieure par l'utilisateur du terminal.

Les messages vocaux ne sont conservés sur le serveur vocal que jusqu'à ce que le serveur de transformation les ait récupérés pour les transmettre au serveur MMS. Les messages multimédia ne sont enregistrés sur le serveur MMS que jusqu'à ce qu'ils aient été transférés sur le terminal de l'utilisateur auquel le message vocal est destiné. Ainsi il n'est pas besoin de prévoir de grosses capacités de stockage pour les messages vocaux, et/ou multimédia. En effet ceux-ci sont avec l'invention stockés dans le terminal de l'utilisateur.

De plus comme l'opérateur a le contrôle du serveur MMS, il est possible pour l'opérateur d'insérer des informations dans les messages multimédia, ou de filtrer les messages multimédia.

L'invention a donc pour objet un procédé de messagerie vocale instantanée dans lequel un utilisateur appelant, appelant un utilisateur appelé, est connecté à un serveur de messagerie vocale, le procédé comportant aussi les étapes suivantes:
- on diffuse, à l'utilisateur appelant, un message d'accueil de messagerie,
- on enregistre un message vocal, émis par l'utilisateur appelant, sur le serveur vocal,
caractérisé en ce que le procédé comporte aussi les étapes suivantes:
- on produit un message multimédia comportant un fichier correspondant au message vocal enregistré et des informations multimédia correspondant à l'utilisateur appelant,
- on transmet le message multimédia au terminal,
- on efface le message vocal et le message multimédia.

L'invention a aussi pour objet un dispositif de messagerie vocale instantanée comportant un serveur de messagerie vocale apte à recevoir un message vocal de la part d'un utilisateur appelant connecté au serveur de messagerie vocale, le dispositif est caractérisé en ce que le serveur de messagerie vocale est connecté à un serveur de transformation apte à produire un message multimédia comportant un fichier correspondant au message vocal et destiné à un utilisateur appelé.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens mis en oeuvre par le procédé selon l'invention.
- Figure 2 : une illustration d'étape du procédé selon l'invention.

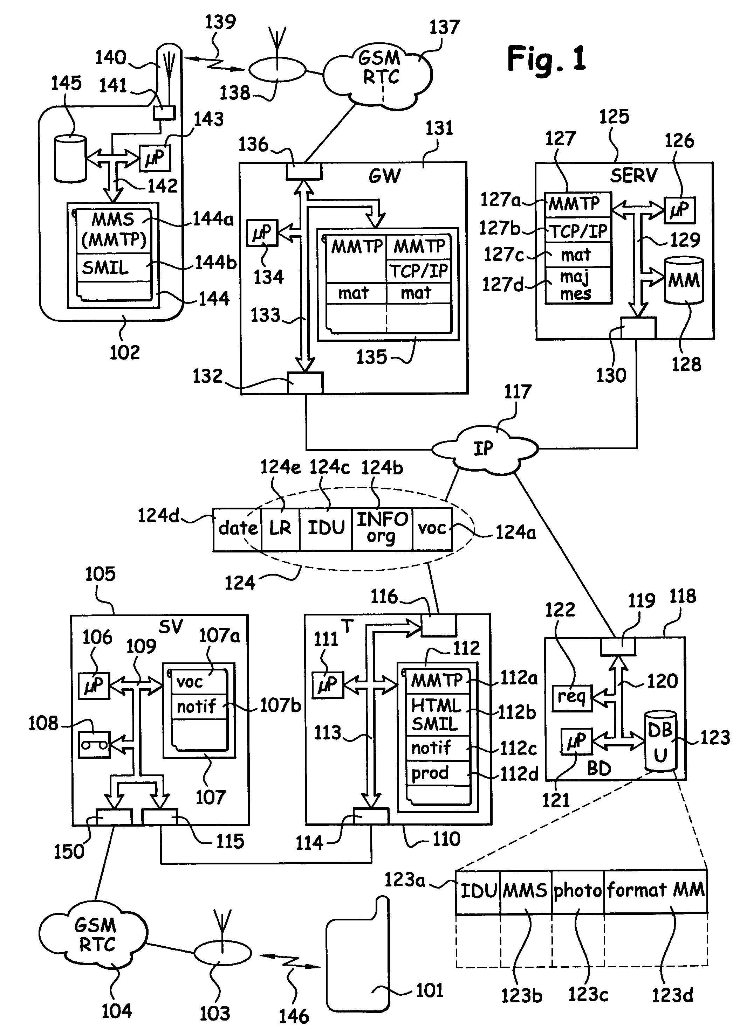

La figure 1 montre un appareil 101 utilisé lors d'une étape 201 préliminaire par un utilisateur appelant essayant de joindre un utilisateur appelé. Dans l'étape 201 l'utilisateur appelant dispose d'un identifiant de l'utilisateur appelé pour essayer de le joindre. Pour la description on considère que l'appareil 101 est un téléphone 101 mobile. Dans ce cas l'identifiant est un numéro de téléphone. Dans la pratique l'appareil 101 pourrait être d'une toute autre nature, comme par exemple un ordinateur personnel, un ordinateur portable, un assistant personnel, etc. L'identifiant pourrait lui aussi être d'une toute autre nature, comme par exemple une adresse électronique de type e.mail, une adresse électronique de type messagerie instantanée (par exemple ICQ) etc.

Dans l'étape 201 l'utilisateur appelant compose donc le numéro de téléphone de l'utilisateur appelé. L'appel est acheminé de manière connue vers l'utilisateur appelé, et plus particulièrement vers un appareil de l'utilisateur appelé qui est dans le cas présent un téléphone 102 mobile. Dans la pratique il est possible que l'utilisateur appelant cherche à se connecter directement à une boîte vocale et compose donc un numéro correspondant à cette boîte vocale. Sinon l'utilisateur appelant peut se retrouver connecté à une boîte vocale pour diverses raisons. Les raisons les plus courantes sont soit que l'utilisateur appelé ne souhaite pas être joint directement, auquel cas il a éteint ou désactivé son téléphone 102 mobile, soit que l'utilisateur appelé n'est pas dans la zone de couverture de l'opérateur auquel il est abonné. Dans ce cas l'appel de l'utilisateur appelant sera directement redirigé vers une boîte vocale.

La figure 1 montre que l'appareil 101 étant un téléphone 101 mobile il est connecté par une liaison 146 hertzienne à une station 103 de base. La station 103 est elle-même connectée à des moyens permettant de relayer les appels effectués par l'utilisateur de l'appareil 101. Ces moyens 104 sont, par exemple, les infrastructures d'un réseau GSM et/ou d'un réseau de téléphonie commuté. Bien sûr il pourrait s'agir d'autres infrastructures comme par exemple un réseau UMTS, ou une autre mise en oeuvre quelconque d'une infrastructure de télécommunication. L'appareil 101 est donc connecté, via les moyens 103 et 104, à un serveur 105 vocal. Le serveur 105 vocal comporte des moyens pour enregistrer des messages vocaux. Le serveur 105 vocal comporte aussi des moyens pour diffuser un message d'accueil. Le message d'accueil à diffuser est dépendant de l'identifiant (numéro de téléphone) de l'utilisateur appelé. Il est en effet connu qu'un utilisateur abonné à un réseau de téléphonie puisse personnaliser le message d'accueil de sa boîte vocale. Les moyens du serveur 105 sont donc, de manière schématique, un microprocesseur 106, une mémoire 107 de programme, et une mémoire 108 d'enregistrement des messages vocaux. On ne décrit pas ici le mode de stockage et de sélection des messages d'accueil. Dans la pratique ces messages d'accueil peuvent être enregistrés dans une base de données qui est alors adressée par l'identifiant de l'utilisateur appelé, il est donc ainsi aisé de retrouver le message d'accueil correspondant à l'utilisateur appelé.

Les éléments 106 à 108 sont connectés par un bus 109. Un microprocesseur, par exemple le microprocesseur 106, exécute des codes instructions enregistrés dans une mémoire de programme telle que la mémoire 107. La mémoire 107 comporte une zone 107A correspondant à des codes instructions pour mettre en oeuvre la fonction de serveur vocal du serveur 105. Le serveur 105 comporte aussi des circuits 150 pour se connecter aux moyens 104. Ces circuits 150 sont une interface entre le bus 109 et les moyens 104. La diffusion du message d'accueil correspond à une étape 202 suivant l'étape 201. L'étape 202 se termine, de manière usuelle, par l'émission d'un signal sonore indiquant à l'utilisateur appelant qu'il peut commencer à parler pour produire le message vocal qu'il souhaite laisser à l'utilisateur appelé. On passe de l'étape 202 à une étape 203 d'émission du message vocal.

Dans l'étape 203 l'utilisateur appelant parle donc et les sons qu'il émet sont enregistrés dans la mémoire 108 par le microprocesseur 106. De manière classique et associé au message vocal, le serveur 105 enregistre aussi l'heure de l'appel ainsi qu'un identifiant de l'appelant. Une fois que l'utilisateur appelant a fini son message vocal il raccroche. Le format d'enregistrement dépend du type de la mémoire 108. La mémoire 108 peut être une bande, un disque ou une mémoire flash. Un format classique est le format WAV.

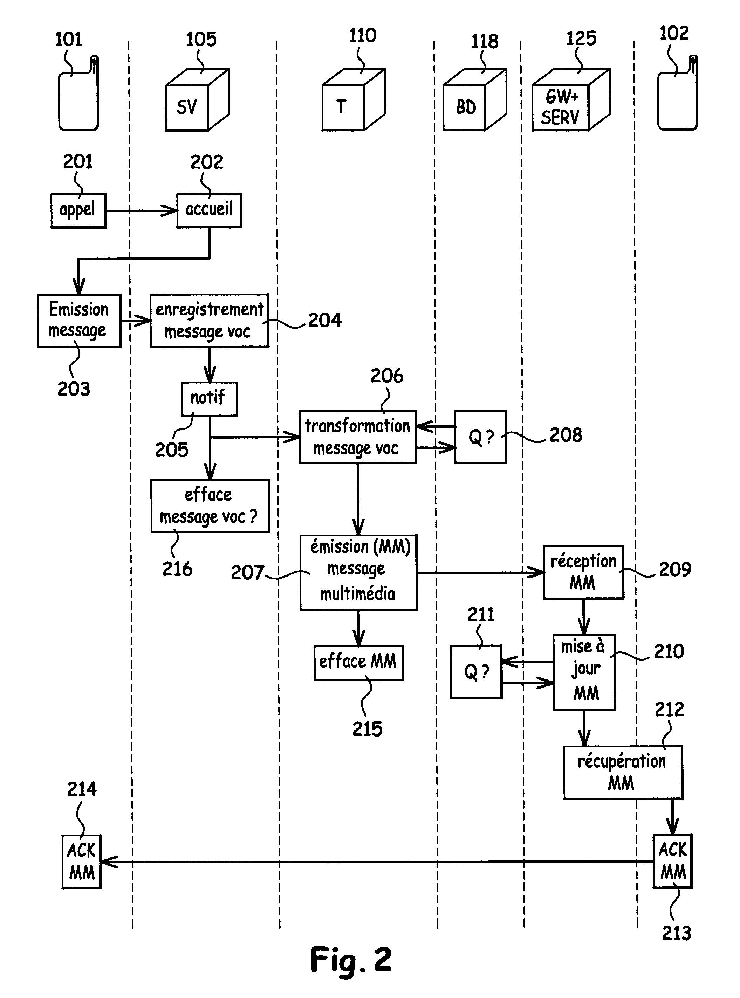

Sur la figure 2 l'étape 203 est suivie d'une étape 204 d'enregistrement du message vocal. Dans la pratique les étapes 203 et 204 sont simultanées. En effet le message vocal est enregistré au fur et à mesure de son émission par l'utilisateur appelant. Les étapes 203 et 204 correspondent donc à une même date vue d'une part par l'appareil 101, d'autre part par le serveur 105.

L'étape 204 est suivie d'une étape 205 de notification. A cette fin la mémoire 107 comporte une zone 107B correspondant aux codes instructions de notification. Dans l'état de la technique une notification consiste à envoyer un message à l'utilisateur appelé pour lui indiquer qu'un message vocal vient d'être enregistré dans sa boîte vocale. Un tel message est en général notifié via un message court.

Dans l'invention le message de notification est envoyé à un serveur 110 de transformation. Le message de notification comporte au moins un identifiant de l'utilisateur appelé. Il comporte aussi une information permettant d'identifier ce message comme étant un message de notification de réception d'un appel vocal par le serveur 105.

Le serveur 110 de transformation comporte des moyens pour transformer un message vocal tel qu'enregistré par le serveur 105 en un message multimédia. Le serveur 110 comporte un microprocesseur 111 connecté à une mémoire 112 de programme via un bus 113. Le serveur 110 comporte aussi des circuits 114 interface de connexion avec des circuits 115 du serveur 105. Les circuits 115 sont connectés au bus 109. Dans notre exemple on a représenté le serveur 105 et le serveur 110 comme deux entités séparées. Dans la pratique les moyens du serveur 110 pourraient très bien être incorporés au serveur 105. Cela reviendrait à dire que les codes instructions du serveur 110 seraient en fait enregistrés dans la mémoire 107 et mis en oeuvre par le microprocesseur 106.

La mémoire 112 est divisée en plusieurs zones. Une zone 112A permet la mise en oeuvre du protocole MMTP pour Multimedia Message Transport Protocol, il s'agit du protocole de transport pour les messages multimédia tels que normalisés dans la norme MMS par le groupe 3GPP. Le 3GPP est le groupe de travail normalisant les téléphones mobiles de troisième génération.

La mémoire 112 comporte une zone 112B permettant la mise en oeuvre d'un langage de formatage de données de type HTML (HyperText Markup Language pour langage de balise hypertexte), XML (eXtensible Markup Language, pour langage de balisage étendu), ou SMIL (pour Synchronized Multimedia Integration Language, pour langage intégré de synchronisation multimédia). Ces deux langages permettent de définir des fichiers qui seront par la suite lus par un programme apte à comprendre les instructions contenues dans ces fichiers. Ces instructions permettent, entre autres, d'afficher du texte et des images, ainsi que de lire des fichiers son.

Une zone 112C comporte des codes instructions permettant au serveur 110 de gérer les notifications émises par le serveur 105. Une zone 112D permet de produire un message multimédia de type message MMS par exemple.

Le serveur 110 comporte aussi des circuits 116 interface avec un réseau 117 de type Internet. Les circuits 116 sont donc une interface entre le réseau 117 Internet et le bus 113. Par l'intermédiaire du réseau 117, le serveur 110 est capable de communiquer avec un serveur 118 de profil. Le serveur 118 est géré par l'opérateur de téléphonie mobile auquel est abonné l'utilisateur appelé. Le serveur 118 comporte une interface 119 de connexion avec le réseau 117. L'interface 119 est connectée à un bus 120, lui-même connecté à un microprocesseur 121, une mémoire 122 de programme et à une unité 123 de stockage. La mémoire 122 comporte des codes instructions permettant au serveur 118 de profil de répondre à des requêtes sur les profils des utilisateurs. Les profils des utilisateurs sont enregistrés sur l'unité 123 sous forme d'une base de données. Une partie de cette base de données peut être représentée sous forme d'un tableau comportant des lignes et des colonnes. Chaque ligne correspond alors à un utilisateur, chaque colonne correspond alors à une caractéristique de cet utilisateur. Une ligne est aussi appelée un profil.

Une colonne 123A comporte un identifiant de l'utilisateur, cet identifiant est par exemple son numéro de téléphone qui lui a été attribué par l'opérateur de téléphonie auquel il est abonné. Une colonne 123B comporte une information indiquant si l'utilisateur est abonné, ou n'est pas abonné à l'option message multimédia. Une colonne 123C comporte une photo de l'utilisateur, et une colonne 123D comporte des informations concernant le formatage des messages multimédias que l'utilisateur souhaite ou ne souhaite pas recevoir. Dans une variante chaque ligne peut aussi comporter les noms et prénoms de l'utilisateur, sous la forme d'une carte de visite électronique ou VCARD, et ou une vidéo de l'utilisateur. Tous les formats de données sont autorisés.

Dans l'étape 205 le serveur 105 émet un message à destination du serveur 110. Il s'agit du message de notification. Le serveur 110 va alors accéder à la base de données 123. Cet accès prend la forme d'une requête pour connaître le contenu du champ 123B correspondant à l'utilisateur appelé par l'utilisateur appelant. Le serveur 118 va répondre à cette requête. La réponse est une trame comportant tout ou partie du profil de l'utilisateur appelé. Cette trame de réponse comporte de préférence un champ correspondant à la colonne 123B. Le serveur 110 est alors en possession de l'information selon laquelle l'utilisateur appelé a souscrit à un abonnement pour recevoir des messages multimédias ou n'a pas souscrit à cet abonnement. Si l'utilisateur appelé n'a pas souscrit à l'abonnement, l'utilisateur appelé sera notifié de l'arrivée du message vocal comme dans l'état de la technique, par un simple SMS. Sinon on passe à une étape 206 de transformation du message vocal en un message multimédia.

Dans l'étape 206 le serveur 110 demande au serveur 105 de lui envoyer le message vocal sous la forme d'un fichier. Ce transfert peut se faire, par exemple, selon le protocole FTP, ou selon tout autre protocole permettant d'échanger des fichiers. Une fois que le serveur 105 a transmis le message vocal au serveur 110, le message vocal est effacé de la mémoire 108 par le serveur 105, c'est l'étape 216 d'effacement du message vocal. Lors de la transmission du message vocal du serveur 105 vers le serveur 110, le serveur 105 transmet aussi les informations accompagnant le message vocal, à savoir la date d'enregistrement du message vocal et l'identifiant de la personne ayant enregistré ce message. La plupart du temps cet identifiant est un numéro de téléphone.

Sur le serveur 105 le message vocal est enregistré à un format quelconque de données. Le message vocal est alors transmis au serveur 110 soit à ce format quelconque, soit il peut être éventuellement compressé si le format quelconque ne l'est pas suffisamment. La compression peut aussi avoir lieu sur le serveur 110, ou sur le serveur 105. Quoi qu'il en soit le message vocal qui sera incorporé dans le message multimédia par le serveur 110 est à un format compressé de type MP3, OGG, ou MP4 pour ne citer que les plus connus.

A l'étape 206 le serveur 110 de transformation est donc en possession au moins du message vocal compressé, d'un identifiant de l'utilisateur appelé, d'un identifiant de l'utilisateur appelant et d'une date d'enregistrement pour le message vocal. Le serveur de transformation peut également être en possession du sujet du message: lors du dépôt du message vocal, l'appelant peut avoir l'option d'indiquer le sujet du message, son importance, et ou son caractère selon qu'il est personnel, urgent, professionnel... A partir de ces informations, le serveur 110 est donc en mesure de produire un message multimédia, par exemple de type MMS, contenant toutes ces informations. Les messages MMS sont un standard dont la norme est définie par le 3GPP. MMS signifie MultiMedia Messaging Service ou service de message multimédia. C'est un service qui permet de véhiculer des messages comportant des composantes multimédia, et du texte. Les composantes multimédia les plus fréquentes sont de l'image, de l'image animée, et du son.

Dans l'étape 206, le serveur 110 constitue donc un message 124 comportant un champ 124A qui comporte le message vocal compressé, un champ 124B comportant un identifiant de l'utilisateur appelant, un champ 124C comportant un identifiant de l'utilisateur appelé, et un champ 124D comportant la date à laquelle a été enregistré le message vocal, et, de manière optionnelle, un champ 124E indiquant si l'utilisateur appelant souhaite recevoir un message l'informant que l'utilisateur appelé a bien reçu le message vocal. Ce message 124, une fois constitué, est envoyé à un serveur 125 de message multimédia.

Le serveur 125 est géré par l'opérateur auquel est abonné l'utilisateur appelé.

Le serveur 125 comporte un microprocesseur 126, une mémoire 127 de programme et une unité 128 de stockage des messages multimédias. Les éléments 126 à 128 sont connectés par un bus 129. Le serveur 125 comporte aussi des circuits 130, connectés au bus 129, servant d'interface entre le réseau 117 et le serveur 125. La mémoire 127 comporte une zone 127A permettant de mettre en oeuvre le protocole MMTP. Une zone 127B permet de mettre en oeuvre le protocole TCP/IP, qui est le protocole de transport utilisé pour émettre des messages via le réseau 117. De manière générale le protocole TCP/IP est aussi mis en oeuvre par les serveurs 110 et 118.

Pour des besoins de compréhension nous avons représenté une zone 127C correspondant à la gestion de la couche matérielle de l'interface réseau. Cela permet de mieux comprendre les interactions entre le serveur 125 de message multimédia et une passerelle 131 de message multimédia.

La mémoire 127 comporte aussi une zone 127D correspondant à la mise à jour du message 124 multimédia produit par le serveur 110 de transformation.

De l'étape 206 on passe à une étape 207 d'émission, par le serveur 110, du message 124 multimédia vers le serveur 125 multimédia.

Le message 124 multimédia peut, via une étape 208 d'interrogation du serveur 118 par le serveur 110, être formaté plus finement. En effet il est possible pour le serveur 110 de transformation de se connecter au serveur 118 pour obtenir le profil de l'utilisateur appelé, et plus particulièrement le contenu du champ 123D. On ne s'étend pas ici sur cette possibilité car elle sera décrite pour la mise à jour du message multimédia par le serveur 125. Il faut cependant savoir que tout ou partie de cette mise à jour peut être faite au niveau du serveur 110.

Après l'étape 207, le serveur 110 n'a plus besoin du message multimédia il peut donc, dans une étape 215 l'effacer. De l'étape 207 on passe aussi à une étape 209 de réception du message 124 multimédia par le serveur 125 multimédia.

L'étape 209 est une étape caractéristique de réception d'un message via le réseau 117 Internet à travers des couches de protocole telles que TCP/IP et MMTP. Une fois le message récupéré, on passe à une étape 210 de mise à jour de ce message. A l'étape 210 le serveur 125 est en possession de toutes les informations décrites pour le message 124.

Ces informations vont permettre au serveur 125 de produire un message tel qu'illustré ci-dessous :

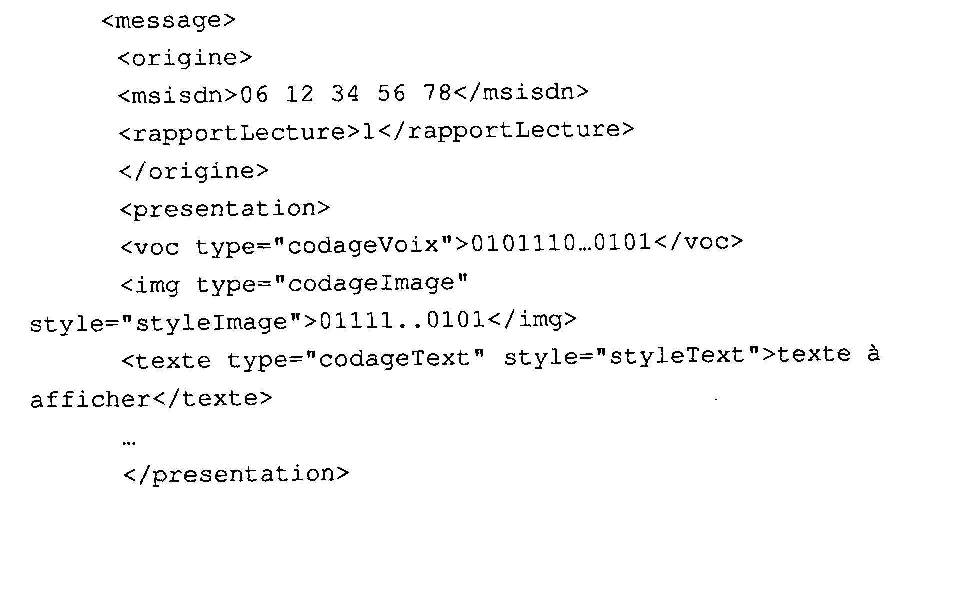

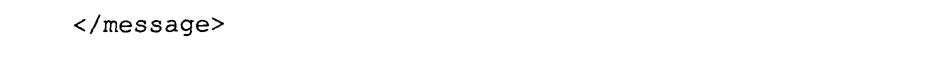

Cet exemple illustre une mise en forme du message via une syntaxe de type XML. Une syntaxe appropriée pour transmettre un message selon l'invention est de type HTML ou SMIL. Nous n'avons pas ici repris le nom des balises de chacun de ces deux langages pour rester le plus générique possible. Ici chaque champ est défini par une balise ouvrante, <balise>, et une balise fermante, </balise>. Il existe d'autres manières de procéder, comme par exemple de décider que chaque champ commence par 4 octets codants la longueur du champ. On passe ainsi facilement d'un champ au suivant.

L'illustration montre donc un message qui comporte un champ origine lui-même divisé en un champ MSISDN et en un champ rapport de lecture. Le champ MSISDN permet de définir le numéro de téléphone de l'utilisateur appelant, le champ rapport de lecture permet de définir si l'utilisateur appelant souhaite recevoir un message lui indiquant que son message vocal a bien été reçu par l'utilisateur appelé. Le champ MSISDN peut être remplacé par un identifiant quelconque, par exemple une adresse électronique de type e-mail, de l'utilisateur appelant.

Le message comporte aussi un champ présentation lui-même divisé en plusieurs sous-champs. Ces sous-champs sont par exemple, le champ 'voc' permettant d'enregistrer un message vocal, le champ 'img' permettant d'enregistrer une image, et le champ 'texte' permettant d'enregistrer un texte. A chacun de ces trois champs est associé un type indiquant quel format est utilisé pour coder le contenu du champ. Typiquement le codage de la voix peut se faire selon le format MP3, le codage d'une image peut se faire selon le format JPEG, et le codage du texte peut se faire selon n'importe quel jeu de caractères par exemple l'alphabet ISO 8859 1. Les sous-champs peuvent être aussi accompagnés d'un champ de styles qui définissent la façon dont ils vont être affichés. Le style englobe des paramètres permettant de définir la position sur un écran et/ou une date à laquelle ils doivent être affichés, une couleur pour le texte ou tout autre formatage envisageable. Par exemple on peut envisager un style compatible avec les feuilles de styles cascadés aussi connu sous le nom de CSS et normalisé par le W3C.

Au cours de l'étape 210 le serveur 125 peut se connecter au serveur 118 pour obtenir, lors d'une étape 211, le profil de l'utilisateur correspondant à l'identifiant de l'utilisateur appelé. On peut imaginer que ce profil de l'utilisateur peut être mis à jour par celui-ci en envoyant depuis son terminal, un message MMS préformaté, comportant ses nom, prénom, image, vidéo d'accueil, message vocal d'accueil, et ou VCARD au service de messagerie instantanée. En effet le champ 123D peut définir comment l'utilisateur souhaite que ces messages vocaux soient formatés. Le champ 123D peut aussi définir un filtre identifiant des utilisateurs de la part desquels l'utilisateur appelé ne souhaite pas recevoir de messages vocaux. Un tel filtre est aussi appelé une liste noire.

Un exemple de formatage personnalisé, serait pour l'utilisateur appelé de souhaiter que lui soit transmis, en même temps que le message vocal, une photo de l'utilisateur appelant, son nom, son prénom, et ou une VCARD. Si l'utilisateur appelant est aussi abonné à l'opérateur de téléphonie mobile gérant le serveur 125 alors celui-ci va consulter la base 123, via le réseau 117, à la recherche de l'identifiant de l'utilisateur appelant pour obtenir le contenu du champ 123C et l'inclure dans le message multimédia qu'il produit pour l'utilisateur appelé.

A l'étape 210 le serveur 125 peut aussi ajouter, au message multimédia produit, les informations qu'il n'a pas reçues via le message 124. De telles informations sont, par exemple, des messages publicitaires. Il peut aussi s'agir d'informations récapitulant le nombre de messages vocaux qu'il a reçus au cours d'une durée écoulée.

Ces messages rajoutés peuvent être insérés soit comme des images, soit comme du texte, soit comme un message vocal.

Après l'étape 210 on passe à une étape 212 de récupération des messages multimédias par le terminal 102.

Le serveur 125 est connecté à la passerelle 131 via le réseau 117. La passerelle 131 comporte des circuits 132 interface entre le réseau 117 et un bus 133 de la passerelle 131. La passerelle 131 comporte aussi un microprocesseur 134 et une mémoire de programme 135.

La passerelle 131 comporte aussi les circuits 136 interface entre le bus 133 et un réseau 137 identique au réseau 104. Le réseau 137 est d'autre part connecté à une station 138 de base permettant d'établir une connexion hertzienne 139 avec le terminal 102. Les éléments de la passerelle 131 sont interconnectés via le bus 133.

Le terminal 102 comporte donc une antenne 140, des circuits 141 interface entre l'antenne et un bus 142 auquel sont connectés un microprocesseur 143, une mémoire 144 de programme et une mémoire 145 de stockage.

Pour la figure 1 on a décrit pour les appareils différentes mémoires. Dans la pratique toutes ces mémoires, pour un appareil donné, peuvent être unifiées sur un seul et même composant.

La mémoire 145 permet au terminal 102 d'enregistrer les messages multimédias. La mémoire 144 est divisée en plusieurs zones, dont une zone 144A permettant la mise en oeuvre des protocoles liés à la norme MMS, et une zone 144B permettant l'interprétation des messages multimédias formatés selon le langage SMIL.

La mémoire 135 est divisée, schématiquement, en deux zones. Une zone permettant à la passerelle de communiquer avec le réseau 117, et une zone permettant à la passerelle 131 de communiquer avec le réseau 137. La zone de la mémoire 135 permettant de communiquer avec le réseau 117 comporte des couches matérielles TCP/IP et MMTP. La zone de la mémoire 135 permettant à la passerelle 131 de communiquer avec le réseau 137 comporte des couches matérielles et MMTP. Le rôle de la passerelle 131 est donc d'effectuer un transcodage des messages échangés entre le serveur 125 et le terminal 102.

Pour l'étape 212 il y a deux méthodes, prévues par la norme MMS, pour le terminal 102 de récupérer les messages multimédias qui lui sont destinés. Soit l'utilisateur appelé du terminal 102 a paramétré son terminal pour que celui-ci interroge à intervalle régulier le serveur 125, soit l'utilisateur appelé utilisant le terminal 102 a paramétré le terminal pour que celui-ci accepte les messages entrants émanant du serveur 125. Un message entrant est, par exemple, un SMS de notification du dépôt d'un message vocal. L'utilisateur sait alors qu'il doit récupérer un message vocal. Un message entrant peut aussi être, via un fonctionnement en mode PUSH permettant au serveur de transformation d'enregistrer un message MMS dans le terminal, un message MMS.

Dans les deux cas de figure l'appareil 102 enregistre les messages multimédias reçus, et tels que formatés par le serveur 125, sur l'unité 145 de stockage. Lors de cet enregistrement l'appareil 102 signale à son utilisateur qu'un nouveau message vocal a été enregistré dans la mémoire 145 et qu'il est consultable.

On passe alors à une étape 213 de consultation / acquittement du message multimédia vocal. Dans l'étape 212, une fois que le serveur 125 a transmis le message multimédia au terminal 102, le message multimédia est effacé de la mémoire 128. Le message multimédia ne subsiste plus alors que dans la mémoire 145 de l'appareil 102.

Dans l'étape 213 l'utilisateur de l'appareil 102, utilisateur appelé, parcourt la mémoire 145 pour lire les nouveaux messages vocaux qu'il vient de recevoir. Lorsqu'il sélectionne un de ces messages, ce message est interprété grâce aux codes instructions de la zone 144D. Cela provoque d'une part la diffusion du message vocal par l'appareil 102, et d'autre part l'affichage des différents éléments multimédias du message multimédia sur l'écran de l'appareil 102. L'intérêt du langage SMIL c'est qu'il permet de synchroniser les uns par rapport aux autres les différents événements que sont la visualisation et l'écoute des éléments multimédias du message.

Au cours de la visualisation du message multimédia, l'utilisateur appelé de l'appareil 102 est informé que l'utilisateur appelant souhaite recevoir un accusé de réception de son message. L'utilisateur appelé peut alors choisir, ou non, d'envoyer cet acquittement. Cet acquittement peut revêtir la forme d'un message court (SMS) envoyé automatiquement par l'appareil 102, ou d'un message MMS classique.

Ce message court sera reçu dans une étape 214 par l'appareil 101. Ce message d'acquittement comporte, par exemple, un identifiant de l'utilisateur appelé, et une date d'émission de ce message d'acquittement.

Une telle mise en oeuvre présente de nombreux intérêts. D'une part l'entité proposant le service de messagerie vocale n'a plus à se soucier du stockage de ces messages vocaux puisque celui-ci est, in fine, réalisé sur le terminal de l'utilisateur destinataire de ces messages vocaux. D'autre part, un opérateur de téléphonie mobile est en mesure de proposer à des prestataires de service un point d'entrée pour messagerie vocale. En effet il suffit pour les prestataires d'être compatibles avec le serveur 125 pour pouvoir proposer les services de messagerie vocale aux abonnés à l'opérateur gérant le serveur 125. Se faisant l'opérateur de téléphonie mobile garde le contrôle de ces messages vocaux car il passe par l'un de ses serveurs. L'opérateur maintient ainsi à la fois le contrôle des flux de messages multimédias et le contrôle du contenu des messages multimédias. Il reste à la charge du prestataire la mise en oeuvre du serveur vocal, et du serveur de transformation.

Dans une variante de l'invention, l'étape 206 de transformation peut comporter une sous-étape de transcodage du message vocal vers un format texte. Cela revient à faire de la reconnaissance vocale sur le message vocal enregistré. Cela permet un très fort taux de compression. Cette reconnaissance vocale peut être effectuée dès le serveur 105 vocal. Dans cette variante on peut envisager une restitution inverse du message vocal reconnu. Cela revient à produire des sons à partir d'un fichier texte. Cette restitution serait alors effectuée par le terminal 102. On peut aussi présenter le message vocal reconnu comme un texte.

Dans une variante de l'invention tout ou partie des communications effectuées via le réseau 117 sont chiffrées pour augmenter la confidentialité.

Le procédé selon l'invention est considéré comme une messagerie vocale instantanée car le message multimédia est délivré à l'utilisateur appelé sans que celui-ci ait à intervenir, et aussitôt que cette délivrance est possible. Dans la mesure ou il est impossible de délivrer un message plus rapidement, on considère qu'il s'agit d'une messagerie instantanée.

L'invention s'applique aussi et sans ambiguïté à la réception de messages vidéos qui remplace alors les messages vocaux dans la description. Seul le serveur 105 est légèrement différent dans ce cas, car il doit alors permettre l'enregistrement de messages vocaux et vidéos.

## Revendications

1. Procédé de messagerie vocale instantanée dans lequel un utilisateur (101) appelant (201), appelant un utilisateur (102) appelé, est connecté à un serveur (105) de messagerie vocale, le procédé comportant aussi les étapes suivantes:
- on diffuse (202), à l'utilisateur appelant, un message d'accueil de messagerie,
- on enregistre (203-204) un message vocal, émis par l'utilisateur appelant, sur le serveur vocal
**caractérisé en ce que** le procédé comporte aussi les étapes suivantes:
- on produit (206) un message multimédia comportant un fichier correspondant au message vocal enregistré et des informations multimédia correspondant à l'utilisateur appelant,
- on transmet (207) le message multimédia à un terminal de l'utilisateur appelé,
- on efface (216, 215) le message vocal et le message multimédia.

2. Procédé selon la revendication 1 **caractérisé en ce que** on efface (216) le message vocal du serveur vocal une fois que le message multimédia a été produit.

3. Procédé selon l'une des revendications 1 ou 2, **caractérisé en ce qu'**on efface (215) le message multimédia une fois qu'il a été transmis à l'utilisateur appelé.

4. Procédé selon l'une des revendications 1 à 3, **caractérisé en ce qu'**un utilisateur appelé paramètre (212) un terminal client multimédia pour interroger un serveur multimédia pour récupérer les messages multimédia destinés à l'utilisateur appelé.

5. Procédé selon l'une des revendications 1 à 4, **caractérisé en ce qu'**un utilisateur appelé paramètre (212) un terminal client multimédia pour que cet appareil client accepte des messages entrant correspondant au message multimédia produit.

6. Procédé selon l'une des revendications 1 à 5, **caractérisé en ce que** pour la production du message multimédia on se connecte (208, 211) à une base de données pour obtenir des préférences de production associées à l'utilisateur appelé pour le formatage du message multimédia.

7. Procédé selon l'une des revendications 1 à 6, **caractérisé en ce que** pour la production du message multimédia on se connecte (208, 211) à une base de données pour obtenir des informations associées à l'utilisateur appelant, pour les inclure dans le message multimédia.

8. Procédé selon l'une des revendications 1 à 6, **caractérisé en ce que** le message multimédia est produit (206) en utilisant un langage de formatage de type HTML.

9. Procédé selon l'une des revendications 1 à 8, **caractérisé en ce que** le message multimédia produit comporte un identifiant (124C) de l'utilisateur appelé.

10. Procédé selon l'une des revendications 1 à 9, **caractérisé en ce que** le message multimédia comporte une information (124E) pour requérir l'émission d'un message d'information de la lecture, par le destinataire, du message multimédia.

11. Dispositif de messagerie vocale instantanée comportant un serveur (105) de messagerie vocale apte à recevoir un message vocal de la part d'un utilisateur (101) appelant connecté au serveur de messagerie vocale, le dispositif est **caractérisé en ce que** le serveur de messagerie vocale est connecté à un serveur (110) de transformation apte à produire un message multimédia comportant un fichier (124A) correspondant au message vocal et destiné à un utilisateur (102) appelé, et **en ce que** le serveur de transformation et le serveur multimédia sont connectés à un serveur (118) de base de données comportant des informations sur les utilisateurs du dispositif, les informations sur l'utilisateur appelant et l'utilisateur appelé provenant de cette base de données sont utilisées pour enrichir le message multimédia par inclusion desdites informations.

12. Dispositif selon la revendication 11, **caractérisé en ce que** le serveur de transformation est connecté à un serveur (130) multimédia apte à transférer le message multimédia sur un terminal client multimédia.

13. Dispositif selon la revendication 12, **caractérisé en ce que** le serveur multimédia est connecté au terminal client multimédia via une passerelle (131) multimédia.

14. Dispositif selon l'une des revendications 11 à 13, **caractérisé en ce que** le serveur multimédia comporte une unité (128) de stockage de masse pour sauvegarder les messages multimédia non téléchargés par l'utilisateur destinataire du message.

## Patentansprüche

1. Push-to-Talk-Verfahren, bei welchem ein anrufender (201) Nutzer (101), der einen angerufenen Nutzer (102) anruft, mit einem Voice Mail Server (105) verbunden wird, wobei das Verfahren weiterhin die folgenden Stufen umfasst:
- Es wird an den anrufenden Nutzer eine Mail-Empfangsmitteilung gesendet (202),
- auf dem Voice Server wird eine Voice Mail aufgezeichnet (203-204), die von dem anrufenden Nutzer gesendet wird,
**dadurch gekennzeichnet, dass** das Verfahren weiterhin die folgenden Stufen umfasst:
- eine Multimedia-Mitteilung wird erzeugt (206), die eine Datei, welche der aufgezeichneten Voice Mail entspricht, und multimediale Informationen enthält, welche dem anrufenden Nutzer entsprechen,
- die Multimedia-Mitteilung wird an ein Terminal des angerufenen Nutzers übertragen (207),
- die Voice Mail und die Multimedia-Mitteilung werden gelöscht (216, 215).

2. Verfahren nach Anspruch 1, **dadurch gekennzeichnet, dass** die Voice Mail aus dem Voice Server gelöscht wird (216), sobald die Multimedia-Mitteilung erzeugt ist.

3. Verfahren nach einem der Ansprüche 1 oder 2, **dadurch gekennzeichnet, dass** die Multimedia-Mitteilung gelöscht wird (215), sobald sie an den angerufenen Nutzer übertragen ist.

4. Verfahren nach einem der Ansprüche 1 bis 3, **dadurch gekennzeichnet, dass** ein angerufener Nutzer ein Client Multimedia Terminal parametrisiert (212), um einen Multimedia Server abzufragen, um die Multimedia-Mitteilungen abzurufen, die für den angerufenen Nutzer bestimmt sind.

5. Verfahren nach einem der Ansprüche 1 bis 4, **dadurch gekennzeichnet, dass** ein angerufener Nutzer ein Client Multimedia Terminal parametrisiert (212), damit dieses Client-Gerät eingehende Mitteilungen annimmt, welche der erzeugten Multimedia-Mitteilung entsprechen.

6. Verfahren nach einem der Ansprüche 1 bis 5, **dadurch gekennzeichnet, dass** zur Erzeugung der Multimedia-Mitteilung eine Verbindung zu einer Datenbank hergestellt wird (208, 211), um Erzeugungspräferenzen bezüglich des angerufenen Nutzers zwecks der Formatierung der Multimedia-Mitteilung zu erhalten.

7. Verfahren nach einem der Ansprüche 1 bis 6, **dadurch gekennzeichnet, dass** zur Erzeugung der Multimedia-Mitteilung eine Verbindung zu einer Datenbank hergestellt wird (208, 211), um Informationen bezüglich des anrufenden Nutzers zu erhalten, um diese in die Multimedia-Mitteilung aufzunehmen.

8. Verfahren nach einem der Ansprüche 1 bis 6, **dadurch gekennzeichnet, dass** die Multimedia-Mitteilung erzeugt wird (206) unter Verwendung einer Formatierungssprache vom Typ HTML.

9. Verfahren nach einem der Ansprüche 1 bis 8, **dadurch gekennzeichnet, dass** die erzeugte Multimedia-Mitteilung einen Identifikator (124C) des angerufenen Nutzers enthält.

10. Verfahren nach einem der Ansprüche 1 bis 9, **dadurch gekennzeichnet, dass** die Multimedia-Mitteilung eine Information (124E) enthält, um die Sendung einer Informationsmitteilung über das Abspielen der Multimedia-Mitteilung durch den Empfänger anzufordern.

11. Push-to-Talk-Vorrichtung, welche einen Voice Mail Server (105) aufweist, der geeignet ist, um eine Voice Mail von einem anrufenden Nutzer (101), der mit dem Voice Mail Server verbunden ist, zu empfangen, die **dadurch gekennzeichnet ist, dass** der Voice Mail Server mit einem Transformation Server (110) verbunden ist, der geeignet ist, um eine Multimedia-Mitteilung zu erzeugen, die eine Datei (124A) enthält, welche der Voice Mail entspricht und für einen angerufenen Nutzer (102) bestimmt ist, und dass der Transformation Server und der Multimedia Server mit einem Datenbankserver (118) verbunden sind, welcher Informationen über die Nutzer der Vorrichtung enthält, die Informationen über den anrufenden Nutzer und den angerufenen Nutzer, die aus dieser Datenbank stammen, werden verwendet, um die Multimedia-Mitteilung durch Einbeziehen besagter Informationen zu bereichern.

12. Vorrichtung nach Anspruch 11, **dadurch gekennzeichnet, dass** der Transformation Server mit einem Multimedia Server (130) verbunden ist, der geeignet ist, um die Multimedia-Mitteilung auf ein Client Multimedia Terminal zu transferieren.

13. Vorrichtung nach Anspruch 12, **dadurch gekennzeichnet, dass** der Multimedia Server mit dem Client Multimedia Terminal mittels eines Multimedia Gateway (131) verbunden ist.

14. Vorrichtung nach einem der Ansprüche 11 bis 13, **dadurch gekennzeichnet, dass** der Multimedia Server eine Einheit (128) zur Massenspeicherung aufweist, um jene Multimedia-Mitteilungen zu speichern, die nicht von dem Nutzer heruntergeladen werden, an den die Mitteilung adressiert ist.

## Claims

1. Instantaneous voice messaging service in which a calling (201) user (101), calling a called user (102), is connected to a voice messaging server (105), the process including the following steps:
- a messaging greeting message is broadcast (202), to a calling user,
- a voice message, emitted by the calling user, is recorded (203-204) on the voice server,
**characterised in that** the process also includes the following steps:
- a multimedia message is produced (206) including a file corresponding to the recorded voice message and multimedia data corresponding to the calling user,
- the multimedia message is transmitted (207) to a called user terminal,
- the voice message and the multimedia message are deleted (216, 215).

2. Process according to claim 1, **characterised in that** the voice message is deleted (216) from the voice server once the multimedia message has been produced.

3. Process according to one of claim 1 or 2, **characterised in that** the multimedia message is deleted (215) once it has been transmitted to the called user.

4. Process according to one of claims 1 to 3, **characterised in that** a called user configures (212) a multimedia client terminal to interrogate a multimedia server to collect the multimedia messages destined for the called user.

5. Process according to one of claims 1 to 4, **characterised in that** a called user configures (212) a multimedia client terminal for this client apparatus to accept incoming messages corresponding to the multimedia message produced.

6. Process according to one of claims 1 to 5, **characterised in that** for the production of the multimedia message connection is made (208, 211) to a database to obtain production preferences associated with the called user to format the multimedia message.

7. Process according to one of claims 1 to 6, **characterised in that** for the production of the multimedia message connection is made (208, 211) to a database to obtain data associated with the calling user, for their inclusion in the multimedia message.

8. Process according to one of claims 1 to 6, **characterised in that** the multimedia message is produced (206) using a formatting language of HTML type.

9. Process according to one of claims 1 to 8, **characterised in that** the multimedia message produced includes an identifier (124C) of the called user.

10. Process according to one of claims 1 to 9, **characterised in that** the multimedia message includes data (124E) to require the emission of a message with information that the multimedia message has been read by the recipient.

11. Instantaneous voice messaging device including a voice messaging server (105) able to receive a voice message from a calling user (101) connected to the voice messaging server, the device is **characterised in that** the voice messaging server is connected to a transformation server (110) able to produce a multimedia message including a file (124A) corresponding to the voice message and destined for a called user (102), and **in that** the transformation server and the multimedia server are connected to a database server (118) containing data relating to the users of the device, the data relating to the calling user and the called user emanating from this database are used to enrich the multimedia message by inclusion of the said data.

12. Device as according to claim 11, **characterised in that** the transformation server is connected to a multimedia server (130) able to transfer the multimedia message to a multimedia client terminal.

13. Device according to claim 12, **characterised in that** the multimedia server is connected to the multimedia client terminal via a multimedia gateway (131).

14. Device according to one of claims 11 to 13, **characterised in that** the multimedia server includes a bulk storage unit (128) to save the multimedia messages not downloaded by the user for whom the message is intended.
